# EUROPÄISCHE PATENTANMELDUNG

(11) **EP 3 537 239 A1**
(43) Veröffentlichungstag der Anmeldung: **11.09.2019**
(21) Anmeldenummer: 18160189.9
(22) Anmeldetag: 06.03.2018
(51) Int. Cl.: G05B 19/042

(54) **VERFAHREN ZUM BETREIBEN EINER WERKZEUGMASCHINE MITTELS ANPASSUNG EINES PRECOMPILIERTEN DATENMODELLS**

(71) Anmelder: Siemens Aktiengesellschaft, 80333 München (DE)
(72) Erfinder: Männer, Andres, 09236 Claußnitz OT Diethensdorf (DE)

(57) **Zusammenfassung**

Diese Erfindung betrifft ein Verfahren zum Bertreiben einer Werkzeugmaschine sowie eines entsprechenden Werkzeugmaschinensystems (20). In einer externen Servereinrichtung (18) werden zum einen ein generisches erstes Datenmodell sowie Engineering-Daten (17) bereitgestellt. Die Engineering-Daten (17) beinhalten Informationen spezifisch betreffend eine Werkzeugmaschine (10). Nach einer Benutzeranfrage betreffend einen Betrieb der Werkzeugmaschine (10) wird das erste Datenmodell übersetzt und/oder modifiziert zu einem zweiten Datenmodell. Dies geschieht in Abhängigkeit von den Engineering-Daten (17) durch die externe Servereinrichtung (18). Das zweite Datenmodell wird von der externen Servereinrichtung (18) zu der Werkzeugmaschine (10) übertragen und eine Steuereinheit (16) der Werkzeugmaschine (10) kann die Werkzeugmaschine (10) gemäß dem zweiten Datenmodell betreiben. Damit kann eine jeweilige Anpassung der Werkzeugmaschine (10) außerhalb der Laufzeit der Werkzeugmaschine (10) erfolgen.

## Beschreibung

Die vorliegende Erfindung betrifft ein Verfahren zum Betreiben einer Werkzeugmaschine. Darüber hinaus betrifft die vorliegende Erfindung ein Werkzeugmaschinensystem mit einer externen Servereinrichtung sowie einer Werkzeugmaschine.

Eine Werkzeugmaschine ist ein komplexer Zusammenschluss verschiedener logischer und physischer Komponenten mit diversitärer Multiplizität. Die Quantität, die Diversität und Bedeutung der zugrundeliegenden Datenstrukturen ist komponenten- und projektierungsspezifisch. Das heißt je nach Anwendungsfall und Einsatzbedarf kann die zugrundeliegende Datenstruktur unterschiedlich ausgebildet sein. Diese Datenstruktur wird insbesondere durch ein spezifisches und implizites Datenmodell beschrieben. Im Rahmen von Industry 4.0 und IoT (Internet of Things) wird dieses spezifische und implizite Datenmodell einer Werkzeugmaschine auf generisches und konsistentes Datenmodell "gemappt". Mappen bedeutet in diesem Fall, dass das generische Datenmodell derart übersetzt und/oder modifiziert wird, dass es zu einem spezifischen Datenmodell wird. Damit kann diversen Apps eine einheitliche Schnittstelle angeboten werden.

Der konkrete Anwendungsfall sieht in der Regel vor, die Funktionalität einer Maschine mit zusätzlichen Funktionen aus einer Cloud zu erweitern. Diese zusätzlichen Funktionen können in einem Appstore angeboten werden, ohne den spezifischen Aufbau der jeweiligen Werkzeugmaschine zu kennen. Das heißt in einem Appstore ist ein generisches Datenmodell hinterlegt, welches die Werkzeugmaschine im Groben beschreibt, ohne dabei alle technischen Details einer speziellen Werkzeugmaschine zu kennen. Somit basiert die maschineninterne Architektur auf einem anderen Datenmodell als für die Kommunikation mit Apps von der Cloud verwendet wird. Das Übersetzen und/oder Modifizieren dieser Datenmodelle (Mapping) ergibt zur Laufzeit der Werkzeugmaschine architekturelle Nachteile sowie mögliche Leistungseinbußen. Dies liegt daran, dass das spezifische Datenmodell nicht mit dem generischen Datenmodell übereinstimmt und eine entsprechende Transformation eines dieser Datenmodelle nötig ist. Zudem wird dadurch eine Modifikation und/oder Erweiterung der Maschinenimplementierung notwendig. Bisher wurden die entsprechenden Datenmodelle im Bereich der Werkzeugmaschine (zum Beispiel serverseitig innerhalb eines OPC-Servers oder clientseitig innerhalb der App) realisiert.

Die Aufgabe der vorliegenden Erfindung ist somit ein Verfahren bereitzustellen, womit eine Werkzeugmaschine effizienter betrieben werden kann.

Diese Aufgabe wird anhand der unabhängigen Patentansprüche gelöst. Sinnvolle Weiterbildungen ergeben sich anhand der Unteransprüche.

Die vorliegende Erfindung sieht ein Verfahren zum Betreiben einer Werkzeugmaschine vor. Dazu werden folgende Verfahrensschritte ausgeführt. In einem Schritt a wird eine Werkzeugmaschine bereitgestellt, welche eine Schnittstelle (später auch als erste Schnittstelle bezeichnet) zu einer externen Servereinrichtung aufweist. Eine Werkzeugmaschine ist insbesondere eine Maschine zur Fertigung von Werkstücken mit Werkzeugen. Die Bewegung der Werkzeuge zueinander wird durch die Werkzeugmaschine vorgegeben. Die Werkzeugmaschine kann als Drehmaschine, Fräsmaschine, Erodiermaschine sowie als mechanische Presse, oder Maschinenhämmer zum Schmieden ausgebildet sein. Die Werkzeugmaschine kann ebenfalls als CNC-Maschine ausgebildet sein. In einem Schritt b wird ein generisches erstes Datenmodell in der externen Servereinrichtung bereitgestellt. Dieses generische erste Datenmodell ist insbesondere auch ein konsistentes Datenmodell. Mit einem solchen ersten generischen Datenmodell können mehrere Werkzeugmaschinen allgemein beschrieben sein. In der Regel ist das generische erste Datenmodell nicht auf eine spezifische Werkzeugmaschine abgestimmt.

Im nächsten Schritt c werden Engineering-Daten an die externe Servereinrichtung bereitgestellt, wobei die Engineering-Daten Informationen spezifisch betreffend die Werkzeugmaschine beinhalten. Engineering-Daten können insbesondere Informationen zu Abläufen beinhalten, die bei einem Betrieb der Werkzeugmaschine nötig sind. Somit beschreiben Engineering-Daten mehr als nur reine technische Informationen, welche zum Beispiel lediglich die Abmessungen einer Werkzeugmaschine als solche aufweisen könnten. Somit können die Engineering-Daten insbesondere Informationen spezifisch eines Betriebs der Werkzeugmaschine beinhalten.

Im weiteren Verlauf des Verfahrens wird in einem Schritt d eine Benutzeranfrage betreffend einen Betrieb der Werkzeugmaschine an die externe Servereinrichtung erzeugt. Die Benutzeranfrage kann beispielsweise die Herstellung eines gewünschten Werkstückes betreffen. So kann die Benutzeranfrage beispielsweise den Wunsch beinhalten, aus einem Metallrohling einen Flansch gemäß einer technischen Zeichnung herzustellen. In vielen Fällen betrifft daher die Benutzeranfrage die Herstellung eines gewünschten Werkstückes. Die Art und Form des Werkstückes können beispielsweise mittels einer technischen Zeichnung oder einem Datensatz vorgegeben sein. Dies bedeutet, dass die Benutzeranfrage keine allgemeine Frage darstellt, wie zum Beispiel der Frage nach dem aktuellen Wetter.

In einem weiteren Schritt e wird das generische erste Datenmodell zu einem zweiten Datenmodell in Abhängigkeit von den Engineering-Daten durch die externe Servereinrichtung übersetzt und/oder modifiziert, wobei die Benutzeranfrage diesen Schritt e auslöst. Dies bedeutet insbesondere, dass das Übersetzen und/oder Modifizieren des generischen ersten Datenmodells nicht unabhängig von der Benutzeranfrage erfolgt. Erst bei Vorliegen einer Benutzeranfrage wird vorzugsweise der Verfahrensschritt des Übersetzens und/oder Modifizierens in Gang gesetzt. Dabei ist es nicht zwingend notwendig, dass die Benutzeranfrage manuell durch einen Menschen erfolgen muss. Die Benutzeranfrage kann beispielsweise auch vorab in einem Steuerprogramm abgespeichert sein. In einem vorgegebenen Zeitabschnitt beziehungsweise zu einem vorgegebenen Zeitpunkt kann vorgesehen sein, die Benutzeranfrage auszulösen.

Im Schritt f wird das zweite Datenmodell von der externen Servereinrichtung zu der Werkzeugmaschine übertragen. Zugleich kann insbesondere vorgesehen sein, dass das zweite Datenmodell auf der Werkzeugmaschine installiert und zum Betrieb eingerichtet wird. Das Übertragen des zweiten Datenmodells von der externen Servereinrichtung zu der Werkzeugmaschine geschieht vorzugsweise über eine Internetverbindung. Das heißt die Werkzeugmaschine kann über ein Computernetzwerk (insbesondere Internet) mit der externen Servereinrichtung verbunden sein. Dies bedeutet, dass die externe Servereinrichtung als ein cloud-basierter Server eingerichtet sein kann.

In einem letzten Schritt g wird die Werkzeugmaschine gemäß dem zweiten Datenmodell betrieben. Das Betreiben der Werkzeugmaschine führt vorzugsweise eine Steuereinheit der Werkzeugmaschine durch. In besonderen Fällen kann auch vorgesehen sein, dass eine Recheneinheit der externen Servereinrichtung die Werkzeugmaschine aus der Ferne steuert. Dieser Fall würde eine Remote-Steuerung darstellen. In der Regel ist jedoch vorgesehen, dass die Werkzeugmaschine nach der Übertragung des zweiten Datenmodells auch unabhängig von der externen Servereinrichtung betrieben werden kann.

Die Engineering-Daten beinhalten insbesondere implizites Wissen der Werkzeugmaschine. Da diese Engineering-Daten der externen Servereinrichtung bereitgestellt werden, kann der Rechenaufwand des Übersetzens und/oder Modifizierens des ersten generischen Datenmodells aus der Laufzeit der Werkzeugmaschine entfernt werden. Das heißt das Umprogrammieren des ersten generischen Datenmodells in das zweite Datenmodell kann mit diesem Verfahren außerhalb der Werkzeugmaschine stattfinden. Mit Umprogrammieren ist der Vorgang des Übersetzens und/oder Modifizierens gemeint. Dieser Prozess wird oft auch als "mappen", "Mapping" oder als anpassen bezeichnet. Dies bedeutet, dass die externe Servereinrichtung verschiedene Apps aufweisen kann und diese Apps durch die externe Servereinrichtung derart angepasst werden können, dass diese Apps die spezifische Datenstruktur der Werkzeugmaschine verstehen. Mit anderen Worten können die Apps, welche zunächst generisch und in allgemeiner Form vorliegen, maschinenspezifisch so kompiliert werden, dass diese Apps auf der Werkzeugmaschine eingesetzt werden können. Der Prozess des Kompilierens, Programmierens, Übersetzens und/oder Modifizierens wird dabei vorzugsweise außerhalb der Werkzeugmaschine ausgeführt. Dabei bezeichnet der Begriff Kompilieren insbesondere die Umwandlung eines Programmcodes in einen ausführbaren Code. Das heißt das erste generische Datenmodell kann mithilfe eines Kompilierungsprozesses in ein ausführbares zweites Datenmodell umgewandelt werden. Der Schritt e kann insbesondere auch ein Kompilieren aufweisen, sodass das zweite Datenmodell durch die Werkzeugmaschine ausgeführt werden kann. Somit kann mithilfe des zweiten Datenmodells die Werkzeugmaschine in Betrieb gesetzt werden und entsprechend den Vorgaben des zweiten Datenmodells, welche die Benutzeranfrage berücksichtigt, betrieben werden. Dadurch, dass der Rechenaufwand des Kompilierens aus der Laufzeit der Werkzeugmaschine entfernt wird, können sich erhebliche Vorteile in Bezug auf die Performance der Werkzeugmaschine ergeben. So kann ein zweites Datenmodell außerhalb der Werkzeugmaschine erstellt werden, welches für den konkreten Betrieb der Werkzeugmaschine angepasst ist.

Eine weitere Variante dieser Erfindung sieht vor, dass für das Übersetzen und/oder Modifizierens des ersten generischen Datenmodells technische Daten der Benutzeranfrage berücksichtigt werden. Die technischen Daten der Benutzeranfrage können beispielsweise Informationen über den Werkstoff, die Abmessungen des herzustellenden Werkstücks sowie weitere bauliche Eigenschaften und deren Produktionsschritte aufweisen. So kann die Benutzeranfrage beispielsweise als Information beinhalten, ob die Löcher in einem Flansch als Durchgangsbohrungen oder Gewindebohrungen ausgeführt sein sollen. Diese Informationen werden in dieser Variante der Erfindung bei der Erstellung des zweiten Datenmodells berücksichtigt. Dadurch ist es möglich, das Übersetzen und/oder Modifizieren des ersten generischen Datenmodells gezielt nach gewünschten Vorgaben zu beeinflussen. Somit wird es ermöglicht, den Betrieb der Werkzeugmaschine flexibel auszugestalten.

Eine weitere Variante der Erfindung sieht vor, dass das erste Datenmodell von einer ersten Programmiersprache in eine andere zweite Programmiersprache übersetzt wird und in der zweiten Programmiersprache zu dem zweiten Datenmodell modifiziert wird. Solange die Programmiersprache des ersten Datenmodells und des zweiten Datenmodells identisch ist, ist ein Übersetzen in eine andere Programmiersprache nicht zwingend notwendig. Liegt jedoch das erste Datenmodell in einer anderen Programmiersprache vor als das zweite Datenmodell, so wird in dieser Variante der Erfindung das erste Datenmodell von der ersten Programmiersprache in die zweite Programmiersprache übersetzt. Somit kann die Anpassung des ersten Datenmodells auch bei anderen Werkzeugmaschinen, welche beispielsweise über eine andere Softwarearchitektur verfügen, zum Einsatz kommen. Beispielsweise kann ein SQL-Datenmodell in ein OPCA-Datenmodell oder umgekehrt übersetzt werden. Somit wird es ermöglicht, das erfindungsgemäße Prinzip auch plattformübergreifend bei anderen Werkzeugmaschinen mit einer anderen Software-Architektur einzusetzen.

Eine weitere Variante dieser Erfindung sieht vor, dass eine Recheneinheit der externen Servereinrichtung das zweite Datenmodell auf der Werkzeugmaschine zum Betreiben installiert. In diesem Fall übernimmt die externe Servereinrichtung nicht nur das Übersetzen und/oder Modifizieren des ersten generischen Datenmodells zu dem zweiten Datenmodell, sondern darüber hinaus ebenfalls die Installation des zweiten Datenmodells auf der Werkzeugmaschine. Das heißt die Recheneinheit der externen Servereinrichtung kann das zweite Datenmodell auf die Werkzeugmaschine übertragen und dort lauffähig einrichten. Somit kann ebenfalls der Installationsprozess aus der Werkzeugmaschine ausgelagert werden. Somit kann die Werkzeugmaschine auch beim Installationsprozess betreffend das zweite Datenmodell zusätzlich entlastet werden. Dies kann die Leistungsfähigkeit der Werkzeugmaschine noch weiter steigern.

Eine weitere Variante der Erfindung sieht ein Werkzeugmaschinensystem mit einer externen Servereinrichtung vor, welche eine Recheneinheit aufweist. Zu diesem Werkzeugmaschinensystem gehört ebenfalls eine Werkzeugmaschine, die eine erste Schnittstelle zum Kommunizieren mit der externen Servereinrichtung aufweist. Zudem weist die Werkzeugmaschine eine Steuereinheit auf, wobei die Steuereinheit ausgebildet ist, ein erstes generisches Datenmodell über die erste Schnittstelle an die externe Servereinrichtung zu übermitteln und über die erste Schnittstelle ein zweites Datenmodell zu empfangen und die Werkmaschine gemäß dem zweiten Datenmodell zu betreiben.

Zugleich ist die Recheneinheit der externen Servereinrichtung derart ausgestaltet, das erste generische Datenmodell in das zweite Datenmodell zu übersetzen und/oder zu modifizieren. Dies bedeutet insbesondere, dass das Umwandeln des ersten generischen Datenmodells in das zweite Datenmodell (spezifisch für die betreffende Werkzeugmaschine) vornehmlich von der Recheneinheit der externen Servereinrichtung ausgeführt wird. Die Steuereinheit der Werkzeugmaschine kann so von der Aufgabe des Übersetzens und/oder Modifizierens entlastet werden. Die Steuereinheit der Werkzeugmaschine wird vorzugsweise für das Betreiben der Werkzeugmaschine gemäß dem spezifischen zweiten Datenmodell eingesetzt. Dabei wird das spezifische zweite Datenmodell bevorzugt von der Recheneinheit der externen Servereinrichtung erstellt und ist insbesondere auf die betreffende Werkzeugmaschine eingestellt. Die in den Verfahrensschritten und den dazugehörigen Varianten genannten Vorteile gelten sinngemäß auch für das Werkzeugmaschinensystem.

Eine weitere Variante des Werkzeugmaschinensystems sieht vor, dass die Werkzeugmaschine ausgebildet ist, über die erste Schnittstelle mehrere zweite Datenmodelle zu empfangen und/oder die Steuereinheit ausgebildet ist, die Werkzeugmaschine gemäß der mehreren zweiten Datenmodelle zu betreiben. Dies bedeutet insbesondere, dass die Steuereinheit der Werkzeugmaschine nicht nur ein einziges zweites Datenmodell zum Betreiben der Werkzeugmaschine einsetzen kann. Es kann zum Beispiel vorgesehen sein, dass die Steuereinheit mehrere Benutzeranfragen umsetzen soll. Diese Benutzeranfragen können hinsichtlich ihrer technischen Umsetzung unterschiedlich ausgestaltet sein. So kann beispielsweise eine erste Benutzeranfrage vorsehen, dass ein Flansch mit Gewindebohrungen erstellt werden soll und eine zweite Benutzeranfrage kann zum Beispiel vorsehen, dass ein Würfel mit Löchern hergestellt werden soll. Zudem kann vorgesehen sein, dass die jeweiligen Werkstücke bei diesen beiden Benutzeranfragen unterschiedlich sein sollen. In diesem Fall kann die Recheneinheit der externen Servereinrichtung zwei unterschiedliche Datenmodelle bereitstellen. Diese zwei unterschiedlichen Datenmodelle können zu der Werkzeugmaschine übertragen werden und dort installiert werden.

Die Steuereinheit der Werkzeugmaschine kann nun über ein entsprechendes Datenbussystem auf diese beiden unterschiedlichen Datenmodelle zugreifen. Somit kann in diesem Fall die Steuereinheit der Werkzeugmaschine die Werkzeugmaschine so steuern, dass zunächst die erste Benutzeranfrage und anschließend die zweite Benutzeranfrage umgesetzt werden. Damit ist es möglich, komplexe Produktionsschritte in mehrere zweite Datenmodelle aufzuteilen. Die jeweiligen zweiten Datenmodelle können in den entsprechenden Anwendungen (Apps) integriert sein. Somit können die zweiten Datenmodelle übersichtlicher ausgestaltet werden. Die Werkzeugmaschine kann so unterschiedliche Benutzeranfragen umsetzen, was die Flexibilität der Werkzeugmaschine weiter erhöhen kann.

Eine weitere Variante der Erfindung sieht ein Werkzeugmaschinensystem vor, wobei die Werkzeugmaschine mit einer Kontrolleinheit verbunden ist und/oder mittels der Kontrolleinheit die Benutzeranfrage über die zweite Schnittstelle übertragbar ist. Die Werkzeugmaschine kann beispielsweise über einen Touchscreen (berührungsempfindlicher Bildschirm) verfügen, über den die Benutzeranfrage eingegeben werden kann. Im weiteren Verlauf des Verfahrens kann die Benutzeranfrage so an die externe Servereinrichtung übermittelt werden. Anstelle eines Touchscreens kann auch Computer mit der Werkzeugmaschine verbunden sein. In diesem Fall würde die Benutzeranfrage über den Computer an die Werkzeugmaschine und daraufhin über die zweite Schnittstelle zur externen Servereinrichtung übermittelt werden. Es kann jedoch auch vorgesehen sein, dass die Kontrolleinheit direkt mit der externen Servereinrichtung in Kommunikationsverbindung steht und über diese direkte Kommunikationsverbindung die Benutzeranfrage übermittelt wird. Somit ist es möglich, dass die Benutzeranfrage von der Kontrolleinheit direkt zur externen Servereinrichtung übertragbar ist. In diesem speziellen Fall ist die zweite Schnittstelle nicht länger in der Werkzeugmaschine angeordnet, sondern an der Kontrolleinheit. Damit ist es möglich, die Benutzeranfrage zu erstellen, ohne dabei die Werkzeugmaschine benutzen zu müssen. So kann mit der Kontrolleinheit bereits im Vorfeld die Benutzeranfrage erstellt werden, welche daraufhin auch vor dem Aktivieren der Werkzeugmaschine zu dem zweiten Datenmodell umgewandelt werden kann. Damit ist es möglich, die Werkzeugmaschine auch vorab offline einzurichten. Wird die Werkzeugmaschine aktiviert, kann sie über die erste Schnittstelle das entsprechend angepasste zweite Datenmodell von der externen Servereinrichtung empfangen und dementsprechend betrieben werden. In dieser Variante der Erfindung muss das Erstellen der Benutzeranfrage nicht in der Umgebung oder bei der Werkzeugmaschine erfolgen. Dies kann auch an einem anderen Ort, an dem die Werkzeugmaschine nicht befindlich ist, erfolgen.

Eine weitere Variante dieser Erfindung sieht ein Werkzeugmaschinensystem vor, wobei die Werkzeugmaschine eine zweite Schnittstelle und/oder eine Eingabevorrichtung zum Übermitteln und/oder Eingeben einer Benutzeranfrage betreffend einen Betrieb der Werkzeugmaschine aufweist. In diesem Fall kann die Benutzeranfrage direkt an der Werkzeugmaschine erstellt und der externen Servereinrichtung übermittelt werden. Weitere Zusatzgeräte können in diesem Fall entfallen.

Eine weitere Variante dieser Erfindung sieht ein Werkzeugmaschinensystem vor, wobei die Recheneinheit der externen Servereinrichtung über die erste Schnittstelle der Werkzeugmaschine verbunden ist und ausgebildet ist, die Werkzeugmaschine gemäß dem zweiten Datenmodell in Betrieb zu nehmen. Diese Variante sieht vor, dass die Recheneinheit der externen Servereinrichtung über die erste Schnittstelle mit der Werkzeugmaschine verbunden ist. Diese Datenverbindung wird vorzugsweise genau dann aufgebaut, wenn das zweite Datenmodell von der externen Servereinrichtung zur Werkzeugmaschine übertragen werden soll. Neben der reinen Übertragung des zweiten Datenmodells kann insbesondere vorgesehen sein, dass die Recheneinheit das zweite Datenmodell auf der Werkzeugmaschine so einrichtet, dass die Werkzeugmaschine gemäß dem zweiten Datenmodell in Betrieb gesetzt werden kann. Demzufolge kann über die Recheneinheit der externen Servereinrichtung eine Inbetriebnahme der Werkzeugmaschine erfolgen. Das anschließende Betreiben der Werkzeugmaschine wird jedoch vorzugsweise von der Steuereinheit der Werkzeugmaschine ausgeführt. Das Herstellen der Verbindung zwischen externer Servereinrichtung und Werkzeugmaschine kann insbesondere sowohl von der Steuereinheit der Werkzeugmaschine als auch durch die Recheneinheit der externen Servereinrichtung erfolgen. Wird die Kontrolleinheit eingesetzt, so kann auch diese die Datenverbindung herstellen. Somit kann die Werkzeugmaschine von einer externen Einrichtung in Betrieb gesetzt werden und zugleich der Betrieb der Werkzeugmaschine spezifisch gemäß der Benutzeranfrage angepasst werden. Die Benutzeranfrage ist dabei insbesondere über das zweite Datenmodell verwirklicht.

Eine weitere Variante dieser Erfindung sieht ein Werkzeugmaschinensystem vor, wobei die externe Servereinrichtung als cloud-basierter Server ausgebildet ist und über ein Computernetzwerk, das insbesondere als Internet ausgebildet ist, mit der Werkzeugmaschine zumindest zeitweise verbunden ist. Ein cloud-basierter Server zeichnet sich insbesondere dadurch aus, dass er an einem anderen Ort angesiedelt sein kann, an dem sich die Werkzeugmaschine befindet. Der cloud-basierte Server kann beispielsweise auch auf einem anderen Kontinent als die Werkzeugmaschine stationiert sein. Der cloud-basierte Server kann auch als firmeneigenes Intranet ausgebildet sein. Über das Computernetzwerk kann zeitweise eine Datenverbindung von der Werkzeugmaschine zum cloud-basierten Server hergestellt werden. Über diese Datenverbindung kann dann das zweite Datenmodell vom cloud-basierten Server zur Werkzeugmaschine übertragen werden.

Die Transformation des generischen ersten Datenmodells zu dem spezifischen zweiten Datenmodell wird dabei bevorzugt von der Recheneinheit des cloud-basierten Servers durchgeführt. Die Recheneinheit des cloud-basierten Servers kann zum Übertragen des zweiten Datenmodells die Datenverbindung zu der Werkzeugmaschine aufbauen und nach der erfolgreichen Übertragung beziehungsweise Einrichtung des zweiten Datenmodells auf der Werkzeugmaschine diese Datenverbindung auch wieder trennen. Dabei wird die Datenverbindung bevorzugt über das Internet hergestellt. Dies bedeutet insbesondere, dass mittels der ersten Schnittstelle der Werkzeugmaschine eine Verbindung zu dem Computernetzwerk (Internet, Intranet, sonstiges Netzwerk) hergestellt werden kann. Somit kann die Werkzeugmaschine über das Internet mit dem cloud-basierten Server verbunden werden. Die spezifische Einrichtung der Werkzeugmaschine gemäß der Benutzeranfrage wird dabei von Seiten des cloud-basierten Servers beziehungsweise dessen Recheneinheit realisiert. Damit ist es möglich, über einen entfernt platzierten cloud-basierten Server mehrere und auch unterschiedliche Werkzeugmaschinen anzupassen und gemäß der Benutzeranfrage zu modifizieren. Dazu wird vorzugsweise das spezifische zweite Datenmodell auf das erste generische Datenmodell gemappt. In der Regel verfügt ein cloud-basierter Server über genügend hohe Rechenleistung, sodass auch ein ganzer Maschinenpark von Werkzeugmaschinen angepasst beziehungsweise betreut werden kann. Damit kann jede einzelne Werkzeugmaschine des Maschinenparks über den cloud-basierten Server spezifisch gemäß der jeweiligen Benutzeranfrage angepasst werden. Dies geschieht wie in den vorigen Beispielen durch entsprechendes Übersetzen und/oder Modifizieren des ersten generischen Datenmodells zu dem spezifischen zweiten Datenmodell. Das spezifische zweite Datenmodell berücksichtigt dabei insbesondere die spezifischen technischen Eigenschaften der jeweiligen Werkzeugmaschine und die jeweilige Benutzeranfrage.

Eine weitere Variante dieser Erfindung sieht vor, dass die externe Servereinrichtung einen Appstore aufweist, der ein vorgefertigtes zweites Datenmodell zum Betreiben der Werkzeugmaschine bereithält. In vielen Fällen ist gewünscht, dass eine Werkzeugmaschine bestimmte Tätigkeiten immer wieder beziehungsweise öfter ausführt. Dies kann beispielsweise die Herstellung eines konkreten Flanschs betreffen. In diesem Fall kann bereits ein vorgefertigtes zweites Datenmodell in dem Appstore hinterlegt sein, welches bereits die Informationen für die Werkzeugmaschine bereithält, damit diese den Flansch herstellen kann. Vorzugsweise beinhalten die vorgefertigten zweiten Datenmodelle häufig gestellte Benutzeranfragen. Wird beispielsweise häufig die Herstellung eines Würfels nachgefragt, so kann der Appstore ein entsprechendes zweites Datenmodell aufweisen, welches Informationen zur Herstellung des Würfels für die Werkzeugmaschine beinhaltet.

Diese vorgefertigten zweiten Datenmodelle können dabei insbesondere in dem Appstore käuflich erworben werden. Das bedeutet, dass der Appstore ebenfalls eine Zahlungsfunktion aufweisen kann. Bei einer neuen Benutzeranfrage kann es somit möglich sein, dass hierzu bereits ein weiteres vorgefertigtes zweites Datenmodell im Appstore hinterlegt ist, welches auf diese Benutzeranfrage zugeschnitten ist. In diesem Fall muss das entsprechende zweite Datenmodell nicht zusätzlich erstellt werden, da es bereits im Appstore vorhanden ist. Es ist lediglich eine Freischaltung von Seiten der externen Servereinrichtung notwendig. Dies kann beispielsweise im Rahmen eines Zahlungsvorgangs erfolgen. Nach einer erfolgreichen Freischaltung kann das entsprechende zweite Datenmodell von der externen Servereinrichtung beziehungsweise dem cloud-basierten Server zur Werkzeugmaschine übertragen werden. Daraufhin kann die Steuereinheit der Werkzeugmaschine diese so steuern, dass die Benutzeranfrage ausgeführt werden kann. Somit ist es möglich, die Werkzeugmaschine mit jenen zweiten Datenmodellen zu bestücken, welche benutzerseitig erfordert beziehungsweise gewünscht sind. Das heißt die Werkzeugmaschine kann individuell mit verschiedenen zweiten Datenmodellen ausgestattet werden. Somit kann ein Park von mehreren auch unterschiedlichen Werkzeugmaschinen äußerst flexibel ausgestaltet werden.

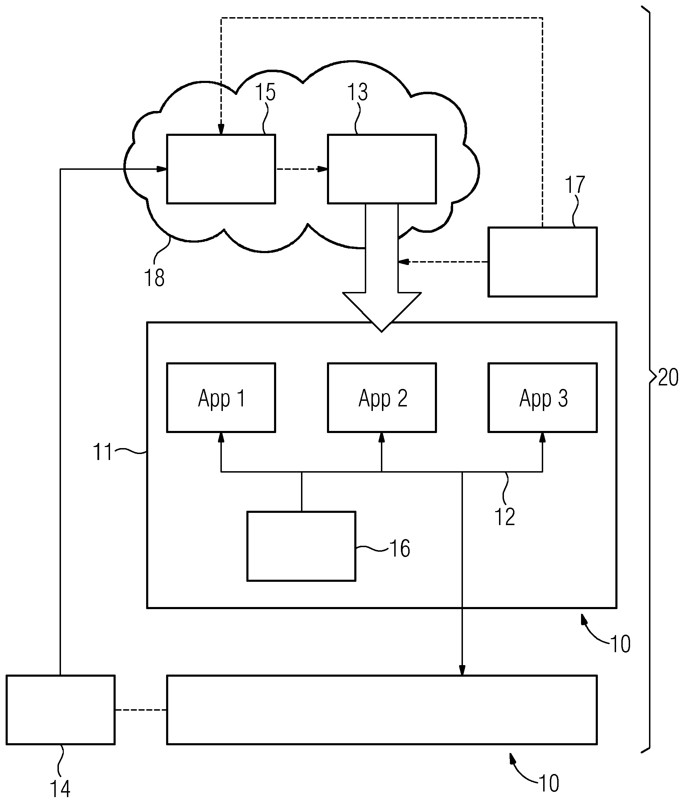

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen anwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Die vorliegende Erfindung wird nun anhand der beigefügten einzigen Zeichnung näher erläutert. Die nachfolgenden beschriebenen Beispiele stellen bevorzugte Ausführungsformen der Erfindung dar. Diese Ausführungsformen sind jedoch nicht einschränkend zu interpretieren.

Die einzige Figur zeigt ein Werkzeugmaschinensystem 20, das eine Werkzeugmaschine 10 sowie eine externe Servereinrichtung 18 aufweist. Die Werkzeugmaschine 10 kann eine interne Steuereinheit 16 sowie einen Datenbus 12 aufweisen. Über den Datenbus 12 kann die Steuereinheit 16 der Werkzeugmaschine 10 auf verschiedene Apps zugreifen. Dabei werden die jeweiligen Apps von der externen Servereinrichtung 18 zu einer maschinenspezifischen IoT-Erweiterung 11 der Werkzeugmaschine 10 übertragen. Die externe Servereinrichtung 18 kann zudem einen Appstore 13 aufweisen. Darüber hinaus ist eine Recheneinheit 15 im Bereich der externen Servereinrichtung 18 angesiedelt.

Im Folgenden wird ein mögliches Beispiel dargestellt, wie mithilfe des Werkzeugmaschinensystems 20 ein gewünschtes Werkstück, zum Beispiel eine Schranktür, hergestellt werden kann. Selbstverständlich können auch andere komplexere Werkstücke hergestellt werden. Die Schranktür soll in diesem Beispiel eine einfache Holzplatte mit mehreren Bohrungen sein, welche als Durchgangslöcher ausgebildet sind. Soll eine individuelle Schranktür hergestellt werden, so kann diese Schranktür durch eine individuelle entsprechende Benutzeranfrage vorgegeben werden. In diesem Fall wird ein Plan von der Schranktür der externen Servereinrichtung 18 übermittelt. Dies kann beispielsweise über eine Kontrolleinheit 14 erfolgen. Das heißt über die Kontrolleinheit 14 kann ein genauer Plan bezüglich der Schranktür mit den jeweiligen Koordinaten der anzufertigenden Durchgangslöcher der externen Servereinrichtung 18 übermittelt werden. Dabei kann die Kontrolleinheit 14 als Touchscreen direkt an der Werkzeugmaschine 10 angeordnet sein. Die Kontrolleinheit 14 kann jedoch auch mit der Werkzeugmaschine 10 verbunden sein (gestrichelt angedeutet) .

Anstelle eines vorgegebenen Plans bezüglich der Schranktür kann es auch möglich sein, vorgefertigte Modelle für die Schranktür zu verwenden. Der Appstore 13 kann zum Beispiel mehrere Modelle zu Schranktüren im Sortiment aufweisen. In diesem Fall würde ein Benutzer über die Kontrolleinheit 14 lediglich ein Modell für die Schranktür im Appstore 13 auswählen. Somit gibt es unterschiedliche Möglichkeiten, wie die Benutzeranfrage an die Recheneinheit 15 übermittelt werden kann.

Um nun das erste generische Datenmodell zu dem spezifischen zweiten Datenmodell zu transformieren benötigt die Recheneinheit 15 jedoch noch weitere Informationen. Dies sind vor allem spezifische Engineering-Daten 17. Die Engineering-Daten 17 beinhalten insbesondere Informationen für den Betrieb der jeweiligen Werkzeugmaschine. In der Regel werden die Engineering-Daten 17 von dem Hersteller der Werkzeugmaschine zur Verfügung gestellt. In diesem Beispiel können die Engineering-Daten 17 Informationen über Anzahl und Art der an oder in der Werkzeugmaschine 10 befindlichen Bohrer aufweisen. Die Engineering-Daten 17 können auch Informationen zu Anzahl der beweglichen Achsen sowie deren räumlichen Ausdehnung beinhalten. Somit spezifizieren die Engineering-Daten 17 in der Regel die jeweilige Werkzeugmaschine 10. Die Recheneinheit 15 der externen Servereinrichtung 18 kombiniert nun die Engineering-Daten 17 mit der Benutzeranfrage, welche von der Kontrolleinheit 14 übermittelt wurde. Die Benutzeranfrage kann dabei auch über eine Auswahl eines zweiten Datenmodells im Appstore 13 erfolgen. Aufgrund der Informationen aus der Benutzeranfrage sowie den Engineering-Daten 17 übersetzt und/oder modifiziert die Recheneinheit 15 das erste generische Datenmodell zu dem zweiten spezifischen Datenmodell. Das heißt die Recheneinheit 15 transformiert das allgemein gehaltene erste Datenmodell in ein spezifisches zweites Datenmodell, womit die Werkzeugmaschine 10 die konkrete Benutzeranfrage (gewünschte Schrankwand) herstellen kann. Anstelle des Begriffs "transformieren" können auch andere Begriffe wie umprogrammieren, übersetzen und/oder modifizieren, anpassen verwendet werden. Dazu wird das spezifische zweite Datenmodell von der Recheneinheit 15 so modifiziert beziehungsweise angepasst, dass die Werkzeugmaschine 10 das zweite Datenmodell lesen und verarbeiten kann. Dies bedeutet insbesondere, dass die Recheneinheit 15 der externen Servereinrichtung 18 das zweite Datenmodell entsprechend der Datenstruktur der Werkzeugmaschine 10 anpasst. Die Recheneinheit 15 erzeugt somit insbesondere einen von der Werkzeugmaschine ausführbaren Programmcode. Das zweite Datenmodell ist bevorzugt dem Betriebssystem und der Programmiersprache der jeweiligen Werkzeugmaschine 10 angepasst. Somit kann die Werkzeugmaschine 10 beziehungsweise die Steuereinheit 16 der Werkzeugmaschine 10 das zweite Datenmodell unmittelbar verarbeiten.

In diesem Fall erstellt nun die Recheneinheit 15 ein spezifisches zweites Datenmodell, welches auf die Werkzeugmaschine 10 zugeschnitten ist, damit die gewünschte Schrankwand hergestellt werden kann. Dazu wird das erste generische Datenmodell für die Werkzeugmaschine 10 mittels der Engineering-Daten 17 angepasst. Zusätzlich werden in diesem Beispiel die jeweiligen Koordinaten der Durchgangslöcher auf der Holzplatte in dem zweiten Datenmodell abgespeichert beziehungsweise hinterlegt. Das spezifische zweite Datenmodell beinhaltet somit in diesem Beispiel konkrete Koordinaten, wo an welcher Stelle welche Durchgangslöcher gesetzt werden sollen. Auch alle weiteren Vorgaben wie zum Beispiel Art der Bohrungen, Größe der Bohrungen und so weiter werden in dem zweiten Datenmodell hinterlegt. Damit beinhaltet das spezifische zweite Datenmodell einen konkreten Plan zur Herstellung der gewünschten Schranktür, welcher zugleich von der Werkzeugmaschine 10 gelesen und verarbeitet werden kann.

Das Erstellen dieses zweiten Datenmodells wird dabei vorzugsweise durch die Recheneinheit 15 innerhalb der externen Servereinrichtung 18 durchgeführt. Das so generierte zweite Datenmodell wird nach seiner Fertigstellung der maschinenspezifischen IoT-Erweiterung 11 übermittelt. Dies geschieht vorzugsweise über eine Internetverbindung. Das zweite Datenmodell kann insbesondere in einer App integriert sein. Die Recheneinrichtung 15 kann insbesondere diese App auf der maschinenspezifischen IOT-Erweiterung 11 einrichten beziehungsweise installieren. Dieser Prozess kann jedoch auch von der Steuereinheit 16 der Werkzeugmaschine 10 durchgeführt werden. Dies bedeutet, dass die Steuereinheit 16 keine Ressourcen zum Übersetzen und/oder Modifizieren des ersten Datenmodells zu dem zweiten Datenmodell bereithalten muss.

Anders betrachtet kann mittels dieser Erfindung die Steuereinheit 16 beziehungsweise die Werkzeugmaschine 10 als Ganzes stark entlastet werden. Dies kann gegenüber der Modellierung eines Datenmappings für Funktionserweiterungen erhebliche Vorteile in Bezug auf die Performance der Datenverarbeitung und Kommunikation mit sich bringen. Die Recheneinheit 15 kann dabei insbesondere berücksichtigen, dass die Werkzeugmaschine 10 nur über eine andere Programmiersprache angesteuert werden kann. Dies bedeutet, dass die Recheneinheit 15 das erste Datenmodell in eine andere zweite Programmiersprache übersetzen kann und das so übersetzte erste Datenmodell entsprechend zu dem spezifischen zweiten Datenmodell umwandeln kann. Somit können Werkzeugmaschinen äußert flexibel betrieben werden, ohne dabei für die jeweilige Werkzeugmaschine unnötig viele digitalen Ressourcen, wie zum Beispiel Arbeitsspeicher, Prozessorkapazität etc. vorhalten zu müssen. Der Aufwand des Erstellens des zweiten Datenmodells kann mittels dieser Erfindung vollständig aus der Werkzeugmaschine ausgelagert werden.

## Patentansprüche

1. Verfahren zum Betreiben einer Werkzeugmaschine (10) durch Ausführen folgender Verfahrensschritte:
a) Bereitstellen einer Werkzeugmaschine (10), welche eine Schnittstelle zu einer externen Servereinrichtung (18) aufweist,
b) Bereitstellen eines generischen ersten Datenmodells in der externen Servereinrichtung (18),
c) Bereitstellen von Engineering-Daten (17) an die externe Servereinrichtung (18), wobei die Engineering-Daten (17) Informationen spezifisch betreffend die Werkzeugmaschine (10) beinhalten,
d) Erzeugen einer Benutzeranfrage betreffend einen Betrieb der Werkzeugmaschine (10) an die externe Servereinrichtung (18),
e) Übersetzen und/oder Modifizieren des generischen ersten Datenmodells zu einem zweiten Datenmodell in Abhängigkeit von den Engineering-Daten (17) durch die externe Servereinrichtung (18) ausgelöst durch die Benutzeranfrage,
f) Übertragen des zweiten Datenmodells von der externen Servereinrichtung (18) zu der Werkzeugmaschine (10),
g) Betreiben der Werkzeugmaschine (10) gemäß dem zweiten Datenmodell.

2. Verfahren nach Anspruch 1, wobei für das Übersetzen und/oder Modifizieren des ersten generischen Datenmodells technische Daten der Benutzeranfrage berücksichtigt werden.

3. Verfahren nach einem der vorigen Ansprüche, wobei das erste Datenmodell von einer ersten Programmiersprache in eine andere zweite Programmiersprache übersetzt wird und in der zweiten Programmiersprache zu dem zweiten Datenmodell modifiziert wird.

4. Verfahren nach einem der vorigen Ansprüche, wobei eine Recheneinheit (15) der externen Servereinrichtung (18) das zweite Datenmodell auf der Werkzeugmaschine (10) zum Betreiben installiert.

5. Werkzeugmaschinensystem (20) mit
- einer externen Servereinrichtung (18), welche eine Recheneinheit (18) aufweist,
- einer Werkzeugmaschine (10), die
* eine erste Schnittstelle zum Kommunizieren mit der externen Servereinrichtung (18) aufweist und
* eine Steuereinheit (16) aufweist, wobei
- die Steuereinheit (16) ausgebildet ist, ein erstes generische Datenmodell über die erste Schnittstelle an die externe Servereinrichtung (18) zu übermitteln und über die erste Schnittstelle ein zweites Datenmodell zu empfangen und die Werkzeugmaschine (10) gemäß dem zweiten Datenmodell zu betreiben, wobei
- die Recheneinheit (15) der externen Servereinrichtung (18) ausgestaltet ist, das erste generische Datenmodell in das zweite Datenmodell zu übersetzen und/oder zu modifizieren.

6. Werkzeugmaschinensystem (20) nach Anspruch 5, wobei die Werkzeugmaschine (10) eine zweite Schnittstelle und/oder eine Eingabevorrichtung zum Übermitteln und/oder Eingeben einer Benutzeranfrage betreffend einen Betrieb der Werkzeugmaschine (10) aufweist.

7. Werkzeugmaschinensystem (20) nach Anspruch 5, wobei die Werkzeugmaschine (10) mit einer Kontrolleinheit (14) verbunden ist und/oder die Kontrolleinheit (14) aufweist und mittels der Kontrolleinheit (14) eine Benutzeranfrage betreffend einen Betrieb der Werkzeugmaschine (14) über die zweite Schnittstelle übertragbar ist.

8. Werkzeugmaschinensystem (20) nach Anspruch 5 bis 7, wobei die Werkzeugmaschine (10) ausgebildet ist, über die erste Schnittstelle mehrere zweite Datenmodelle zu empfangen und/oder die Steuereinheit ausgebildet ist, die Werkzeugmaschine (10) gemäß der mehreren zweiten Datenmodelle zu betreiben.

9. Werkzeugmaschinensystem (20) nach einem der Ansprüche 5 bis 8, wobei die Recheneinheit (15) der externen Servereinrichtung (18) über die erste Schnittstelle der Werkzeugmaschine (10) verbunden ist und ausgebildet ist, die Werkzeugmaschine (10) gemäß dem zweiten Datenmodell in Betrieb zu nehmen.

10. Werkzeugmaschinensystem (20) nach einem der Ansprüche 5 bis 9, wobei die externe Servereinrichtung (18) als cloud-basierter Server ausgebildet ist und über ein Computernetzwerk, das insbesondere als Internet ausgebildet ist, mit der Werkzeugmaschine (10) zumindest zeitweise verbunden ist.

11. Werkzeugmaschinensystem (20) nach einem der Ansprüche 5 bis 10, wobei die externe Servereinrichtung (18) einen App Store (13) aufweist, der ein vorgefertigtes zweites Datenmodell zum Betreiben der Werkzeugmaschine (10) bereithält.
